# EUROPEAN PATENT SPECIFICATION

(11) **EP 3 690 225 B1**
(45) Date of publication and mention of the grant of the patent: **26.01.2022**
(21) Application number: 20160794.2
(22) Date of filing: 04.08.2016
(51) Int. Cl.: F02K 9/96, F02K 9/97

(54) **SOLID ROCKET MOTOR HEALTH MONITORING**
ÜBERWACHUNG DES ZUSTANDS EINES FESTSTOFFRAKETENMOTORS
SURVEILLANCE DE SANTÉ DE MOTEUR-FUSÉE À POUDRE

(30) Priority: 31.08.2015 US 201562212476 P; 30.10.2015 US 201562248464 P; 30.10.2015 US 201562248458 P
(43) Date of publication of application: 05.08.2020
(62) Divisional of application: 16751118.7
(73) Proprietor: Aerojet Rocketdyne, Inc., Canoga Park, CA 91309 (US)
(72) Inventor: NOVAK, Scott, Sacramento, CA California 95813-6000 (US)
(74) Representative: Dehns

(56) References cited:
- FR-A1- 2 787 876
- FR-B1- 2 787 876
- US-A- 3 583 162
- US-A1- 2011 018 703

## Description

### BACKGROUND

Solid rocket motors typically include a cast solid propellant material. Ignition of the solid propellant generates high pressure gas, which is expelled through a nozzle to generate thrust.

A prior art solid rocket motor and method of monitoring health of the same having the features of the preamble of claims 1 and 9 is disclosed in US 2011/018703.

### SUMMARY

From one aspect, the present invention provides a solid rocket motor according to claim 1.

From another aspect, the present invention provides a method for monitoring health of a solid rocket motor according to claim 9.

Features of embodiments are recited in the dependent claims.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example solid rocket motor.
Figure 2 illustrates an example solid rocket motor health monitoring system.
Figure 3 illustrates another example of a solid rocket motor health monitoring system with a low power microprocessor.
Figure 4 illustrates another example of a solid rocket motor health monitoring system with a high power microprocessor.
Figure 5 illustrates another example of a solid rocket motor health monitoring system with a seal.
Figures 6 and 7 illustrate additional examples of solid rocket motor health monitoring systems and seals.
Figure 8 illustrates a seal that is formed of an electromagnetic transmission material.

### DETAILED DESCRIPTION

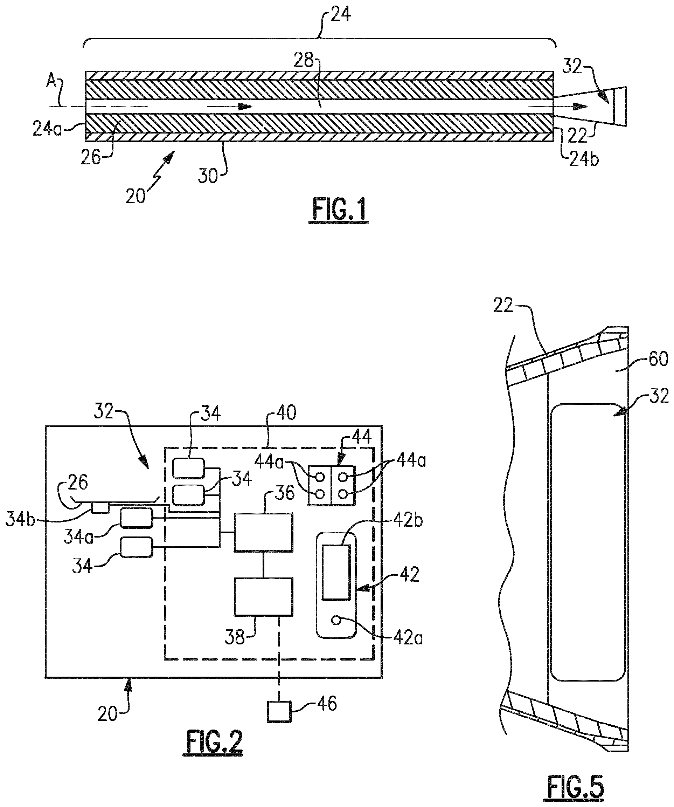

Figure 1 schematically illustrates a cross-section of selected portions of an example solid rocket motor 20, which is also an example of an energetic device. The solid rocket motor 20 generally includes a nozzle 22 and a solid propellant section 24. The solid propellant section 24 includes a forward end 24a and an aft end 24b. A nozzle 22 is attached at the aft end 24b. As will be appreciated, the solid rocket motor 20 may include additional components related to the operation thereof, which are generally known and thus not described herein.

The solid propellant section 24 includes a solid propellant material 26. In this example, the solid propellant material 26 defines an elongated bore 28. The geometry of the bore 28 may be cylindrical and may have radial fin slots or other features. Alternatively, the solid propellant material 26 may not have a bore. The solid propellant material 26 is generally disposed within a motor case 30 about a central axis A.

Upon ignition the solid propellant material 26 reacts to produce high temperature and high pressure gas (combustion gas). The combustion gas flows down the bore 28 and discharges through the nozzle 22 to produce thrust.

The solid propellant material 26 can age prior to use (ignition), such as while the solid rocket motor 20 is in storage. Storage may include the time during which the solid rocket motor 20 is sitting in a storage space (e.g., a silo) and/or the time in which the solid rocket motor 20 is in transport from or to a storage space or from or to a launch site. For purpose of this disclosure, "storage" may include any time prior to use (ignition) of the solid rocket motor 20 to produce thrust.

As an example, exposure to oxygen (air), water moisture (in air), and/or nitrogen (air) in the environment can lead to oxidation reactions, hydrolysis reactions, nitrogen reactions, diffusion and evaporation, hygroscopic reactions, and reformation reactions that may change the overall composition of the solid propellant material 26 and/or the chemistry of one or more constituents of the solid propellant material 26. Thus, there may be a useful life of the solid rocket motor 20 after which it may be considered unsuitable for proper use, handling, or the like. Other environmental factors, such as temperature, pressure, shock, vibration, and humidity level, and cycling of such factors, may also influence the useful life. It is in this regard that the solid rocket motor 20 includes a health monitoring system 32, for diagnosing the health status of the solid rocket 20 with respect to such aging factors that the solid rocket motor 20 may be exposed to while in storage.

The health monitoring system 32 provides the ability to generate data taken from the solid rocket motor 20 and/or surrounding environment, store the data, and transmit the data. From the data an estimate or determination can be made about the health of the solid rocket motor 20, such as the aging health of the solid propellant material 26. In some examples, the health monitoring system 32 can then display an indication of the health status of the solid rocket motor 20 based upon the data.

Figure 2 schematically illustrates an example of the health monitoring system 32. In this example, the health monitoring system 32 includes one or more sensors 34 that are configured to generate data, which may be in the form of a digital or analog signal, necessary to determine the stored health of the solid rocket motor 20. Generally, this data will be indicative of one or more of the factors above, such as moisture, temperature, vibration, etc. The sensor or sensors 34 may therefore include appropriate sensor types for generating the data of interest, such as but not limited to resistive sensors, strain sensors, accelerometers, temperature sensors, pressure sensors, humidity sensors, chemical specie sensors, dimension sensors, environmental sensors, or combinations thereof. The signal may be conditioned inside or outside of the given sensor 34. One example resistive sensor is a sensor based upon aging degradation. For example, the sensor has an element that degrades over time in proportion to one or more environmental factors in the same way as the solid propellant material 26. The degradation proportionally changes the sensor electrical resistance, and the resistance at a given point in time thus represents the cumulative aging effect of the solid propellant material 26.

A memory/processor 36 is connected with the sensor or sensors 34. The memory/processor 36 can receive and store the data from the sensor or sensors 34. The memory/processor 36 is also connected with a communication device 38. The communication device 38 is operable to transmit the data stored in the memory/processor 36. For example, the communication device 38 may be a device that is adapted for wired communication, such as by universal serial bus (USB) connection, or a device that is adapted for wireless communication, such as radio frequency communication device.

In this example, the memory/processor 36 and the communication device 38 are part of an assembly 40, which may be considered a controller or computing device. One or more of the sensors 34 may be integrated with or embedded in the assembly 40, while one or more other sensors 34 may be in fluid communication with the solid propellant material 26 (as represented at 34a) or located elsewhere in the solid rocket motor 20. The term "fluid communication" means that a fluid may contact both the sensor and the solid propellant while the sensor is not in direct contact to the solid propellant. For example, sensor 34a may be attached on or be exposed on a surface of a seal in the nozzle 22 that faces toward the solid propellant material 26. Additionally or alternatively, one or more of the sensors 34 may be attached to and/or in contact with the solid propellant material 26 (as represented at 34b).

The assembly 40 may further include a user interface 42 and an indicator 44. The user interface 42 may have at least one of a button 42a or a screen display 42b (e.g., a touchscreen), each of which is responsive to one or more user inputs. Such user inputs may include, but are not limited to, tactile inputs from a user. The indicator 44 may include one or more indicator elements 44a, such as light emitting diodes (LED). The indicator elements 44a may be on/off type indicators or variable indicators that are capable of changing colors (e.g., red, green, yellow) in accordance with various health status levels of the solid rocket motor 20. As will be appreciated, the assembly 40 may include other devices, such as but not limited to batteries, converters, management circuits, power regulators, one or more microprocessors, and the like, to facilitate communication and cooperative operation among the components described with regard to the functionalities disclosed herein.

In one example, the indicator 44 is operable to indicate a frequency of data collection responsive to the one or more user inputs. For instance, the health monitoring system 32 may have at least two frequency modes of data collection, including a high frequency collection and a low frequency collection. In high frequency collection the sensor or sensors 34 generate the data at a relatively high rate, and in low frequency collection the sensor or sensors 34 generate the data at a relatively low rate. Low frequency collection may be useful when the solid rocket motor 20 is in long term storage and there is lower likelihood that the environment will rapidly change. High frequency collection may be useful when there is higher likelihood that the environment will rapidly change, such as when the solid rocket motor 20 is being handled, is in transport, or is in short term storage. In this regard, the user interface 42 may be configured to change the data frequency collection responsive to the one or more user inputs. As an example, a user may toggle between low and high frequency collection by pushing the button 42a or touching a virtual button on the display screen 42b.

The display screen 42b on the user interface 42 may also be used as an indicator. For example the display screen 42b may be operable to indicate a solid rocket motor health status responsive to the one or more user inputs. Additionally or alternatively, the indicator 44 may be used to indicate a solid rocket motor health status responsive to the one or more user inputs. As an example, a user may press the button 42a or press a virtual button on the display screen 42b to substantially instantaneously display an indication of the solid rocket motor health status.

In one example, a display of the solid rocket motor health status may include a qualitative display. For instance, the qualitative display may be an illumination of a particular indicator element 44a corresponding to good, poor, or intermediate health status. In another example, the qualitative display may be an illumination of a particular color corresponding to good, poor, or intermediate health status. Additionally or alternatively, a display of the solid rocket motor health status may include a quantitative display in the form of a life percentage or other quantity representative of health status.

The communication device 38 of the assembly 40 can communicate with an external computing device 46, which may or may not be part of the health monitoring system 32. For example, the communication device 38 can transmit the data to the external computing device 46. The external computing device 46, itself or in cooperation with one or more other computing devices, can analyze the data to determine the health status of the solid rocket motor 20. The health status may also be used to determine other diagnostics or prognostics of the solid rocket motor 20. For example, the external computing device 46 and/or one or more other computing devices may include software for analyzing the data and determining health status based on preprogrammed conditions.

The health status may be determined on the basis of preset thresholds related to the type of data. For instance, for the given solid propellant material 26, aging experiments may be conducted to determine environmental thresholds related to desired performance and/or stability levels of the solid propellant material. The environmental thresholds may relate to one or more of the factors discussed above (temperature, vibration, humidity, etc.). The environmental thresholds may be based on detected excursions in the given factor (e.g., temperature spiked above a certain level) and/or cumulative thresholds based on integrations of the factors over time (e.g., temperature history over time, pressure history over time, etc.). The data may then be analyzed in comparison to one or more thresholds to make one or more determinations of health status of the solid rocket motor 20. Once a determination is made, the health status may be represented in the form of status data that is communicated into the communication device 38 from the external computing device 46. The status data may contain instructions for the indicator 44 and/or the display screen 42b to indicate the determined health status.

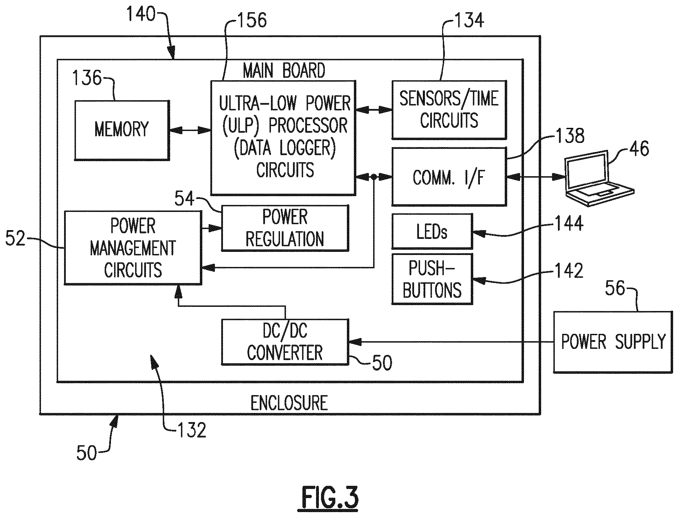

Figure 3 illustrates another example health monitoring system 132. In this disclosure, like reference numerals designate like elements where appropriate and reference numerals with the addition of one-hundred or multiples thereof designate modified elements that are understood to incorporate the same features and benefits of the corresponding elements. The health monitoring system 132 includes a self-contained panel 50 that houses a controller or computing device 140. The assembly 140 includes one or more sensors 134, a memory 136, a communication device 138, a user interface 142, and an indicator 144. In this example, the assembly 140 also includes a converter 50, a power management circuit 52, a power regulator 54, and a low power microprocessor 156. The microprocessor 156 may serve basic functions, such as controlling or logging data collection and storage in the memory 136, controlling communications through the communication device 138, and controlling power consumption through the power management circuit 52 and power regulator 54. A power supply 56 is located outside of the panel 50, and may be located elsewhere on the solid rocket motor 20. Alternatively or additionally, a power source may be included in the panel 50.

In this example, functions that require greater computing capacity, such as the determination of health status, are not conducted by the low power microprocessor 156. Rather, the data is transmitted through the communication device 138 to the external computing device 46 for determination of health status as described above.

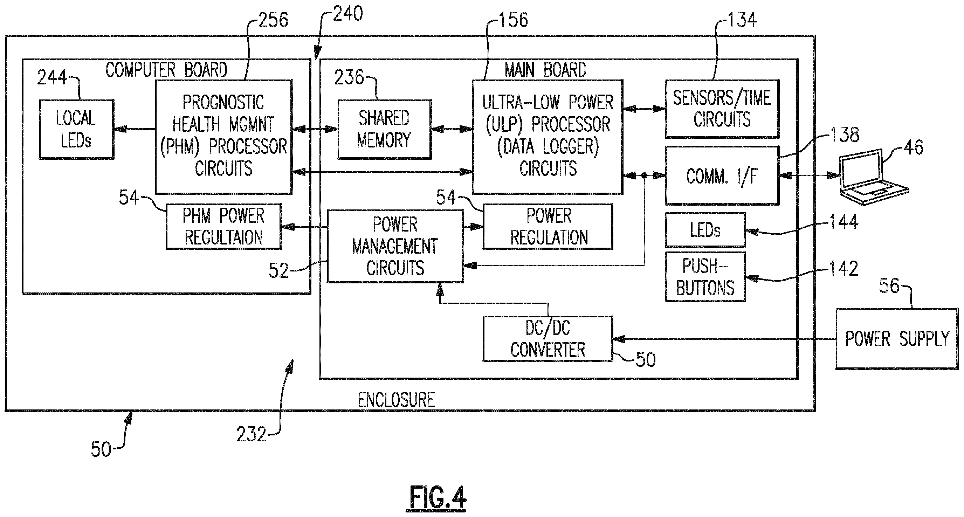

Figure 4 illustrates another example health monitoring system 232. In this example, the assembly 240 includes a second, high power microprocessor 256 in addition to the first, low power microprocessor 156. The microprocessors 156/256 may share the memory/processor 236. An additional power regulator 54 may serve the high power microprocessor 256, and the microprocessor 256 may have its own indicator 244. The microprocessors 156/256 divide functions of the assembly 240. For example, the low power microprocessor 156 serves the basic functions as described above. The high power microprocessor 256 serves the function of partial or full determination of the health status based on the data. For instance, the high power microprocessor 256 may conduct at least a portion of the analysis of the data for determining the health status. Additional analysis may be performed by the external computing device 46 in cooperation with any analysis performed by the high power microprocessor 256. Alternatively, the high power microprocessor 256 performs the full analysis and determines the health status, as described above. In this regard, the assembly 240 may provide full health management functionality. The assembly 240 may still communicate with the external computing device 46 or other computing devices for additional or other purposes, such as logging or reporting health status to remote locations.

The health monitoring system 32/132/232 is attached on the solid rocket motor 20 and fully or partially integrated into components of the solid rocket motor 20. Figure 5 illustrates an example in which at least a portion of the health monitoring system 32 (or alternatively health monitoring system 132 or 232) is integrated or attached with a seal 60 that is attached to the motor 20, such as to the motor case 30. The integration with the seal 60 may reduce intrusiveness of the health monitoring system 32 in the solid rocket motor 20, as all or most of the components of the health monitoring system 32 can be included with the seal 60 and avoid the need to embed sensors or other devices in the propellant during fabrication. The seal 60 is thus an "intelligent" or "smart" seal.

The seal 60 is attached to the motor 20. For instance, the seal may be located in, or is at least attached to, the nozzle 22 which is attached to the motor case 30 of the motor 20. The seal 60 plugs the nozzle 22 and thus isolates the solid propellant material 26 from an exterior of the case 30 by serving as a barrier to entry of air, moisture, or other environmental fluids into the solid rocket motor 20. All or part of the health monitoring system 32, or health monitoring systems 132 or 232 described herein, may be integrated or attached with the seal 60. In accordance with the claims, at least the user interface 42 and the indicator 44 is integrated with the seal 60. Most typically, all of the parts of the health monitoring system 32, except perhaps one or more of the sensors 34, will be integrated or attached with the seal 60.

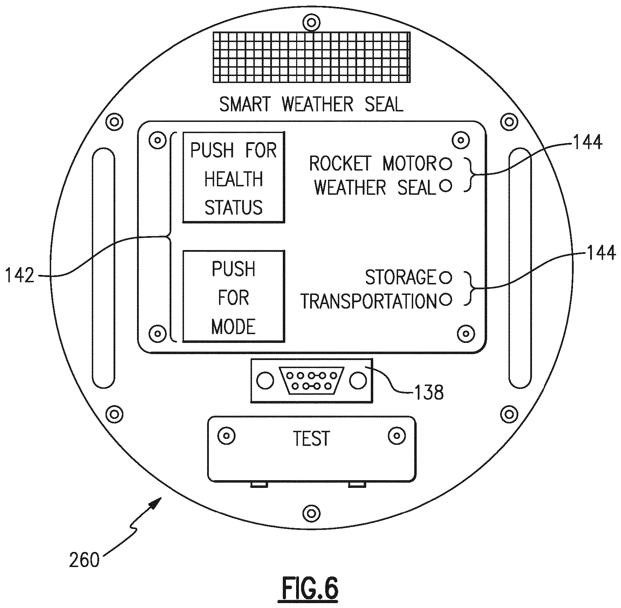

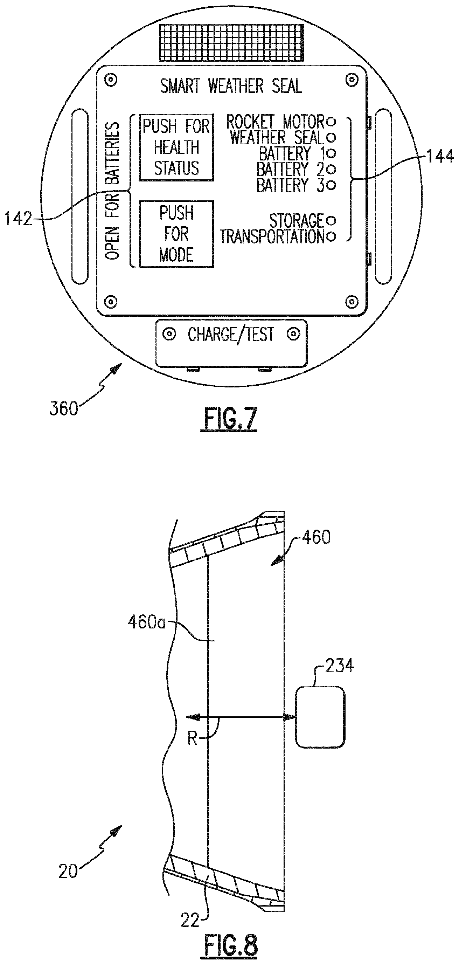

Figures 6 and 7 illustrate examples of smart seals with integrated health monitoring systems. Figure 6 illustrates a seal 260 with an intermediate level health monitoring system, which may be similar to the health monitoring system 132. In this example, the health monitoring system additionally can receive user inputs via the user interface 142 and can provide indications of data frequency collection mode and health status via indicator 144.

Figure 7 illustrates a seal 360 with a high level health monitoring system, which may be similar to the health monitoring system 232. In this example, the health monitoring system additionally can internally make full or partial determinations of health status. Also, the communication device 138 (not shown) is a wireless device, and thus no communication port is shown. The health monitoring system also includes its own internal power supply, such as one or more batteries, and thus additionally includes indicator elements in the indicator 144 for displaying battery charge status.

Figure 8 illustrates a portion of the motor 20, with another not claimed example seal 460 attached to the motor 20 via the nozzle 22. The seal 460 may be used independently or with any of the health monitoring systems described herein. The seal 460 is fully or partially formed of an electromagnetic transmission material 460a. For example, the electromagnetic transmission material 460a substantially permits transmission of electromagnetic radiation, such as visible light, through the seal 460. One or more sensors 234, such as one or more optical sensors, are arranged proximate the seal 460. As examples, the sensor or sensors 234 may be immediately next to and in contact with the seal 460, spaced from the seal 460, or fully or partially in the seal 460. The sensor or sensors 234 are configured to generate the data based upon electromagnetic measurements through the seal 460. For example, electromagnetic radiation, R, passes through the seal 460 to and/or from the sensor or sensors 234 to generate the data.

The electromagnetic radiation may be, but is not limited to, optical radiation. In this regard, the electromagnetic transmission material 460a may be glass or other material that is substantially transparent or translucent to optical radiation. For instance, the sensor or sensors 234 may be optical sensors operable to measure one or more parameters of the solid propellant material 26. The parameters may include, but are not limited to, dimensional parameters (e.g., bore diameter) and chemical parameters. A similar seal and sensor may be provided at the forward end 24a of the solid rocket motor 20, and the sensors may communicate or cooperate through the seals to take electromagnetic measurements and generate the data.

The methodology of the health monitoring system 32/132/232 is described herein above with regard to the various system architectures. Such methods may include affixing the seal 60/260/360/460 to the rocket motor 20 or other energetic device, generating data in the form of a signal from the one or more sensors 34/34a/134 associated with the solid rocket motor 20, receiving and storing/recording the data in the memory/processor 36/136/236 connected with the one or more sensors 34/34a/134/234, communicating to the external computing device 46 at least a portion of the data stored in the memory/processor 36/136/236 using the communication device 38/138, receiving the status data from the external computing device 46 into the assembly 40/140/240 via communication device 38/138, and displaying on the indicator 44/144 (and/or on the user interface 42/142) an indication of the solid rocket motor health status based on the status data.

## Claims

1. A solid rocket motor (20), comprising:
a case (30);
a solid propellant material (26);
a seal (60) attached to the motor (20), the seal (60) isolating the solid propellant material (26) from a fluid external of the case (30);
a computing device (46) attached to the seal (60) and connected with a sensor (34,34a;134;234), the computing device (46) including a processor, a memory (156;256), and a communication device (38;138); and
an indicator (44;144;244) connected to the computing device (46), **characterised in that**
the indicator (44;144;244) is integrated with the seal (60) and is operable to indicate a health status of the solid rocket motor (20) via a qualitative or quantitative display.

2. The solid rocket motor of claim 1, wherein the processor includes the memory (156;256).

3. The solid rocket motor of claim 1 or 2, wherein the sensor (34,34a;134;234) is in fluid communication with the solid propellant material (26).

4. The solid rocket motor of claim 1, 2 or 3, wherein the sensor (34,34a;134;234) is in contact with the solid propellant material (26).

5. The solid rocket motor as recited in any preceding claim, wherein the sensor (34,34a;134;234) is configured to generate data indicative of stored health of the solid rocket motor (20).

6. The solid rocket motor as recited in any preceding claim, wherein the indicator (44;144;244) is operable to indicate at least two frequency modes of data collection.

7. The solid rocket motor of claim 6, wherein the at least two frequency modes of data collection include a high frequency collection and a low frequency collection.

8. The solid rocket motor of claim 7, wherein in the high frequency collection the sensor (34,34a; 134;234) generates the data at a relatively high rate, and in the low frequency collection the sensor (34,34a;134;234) generates the data at a relatively low rate.

9. A method for monitoring health of a solid rocket motor (20), the method comprising:
affixing a smart seal (60) to a solid rocket motor (20), the smart seal (60) including a sensor (34,34a;134;234);
generating a signal from the sensor (34,34a;134;234);
recording data representative of the signal from the sensor (34,34a;134;234) in a memory (156;256);
communicating the data from the smart seal (60) to an external computing device (46); and
displaying an indication of a health status of the solid rocket motor (20), wherein the indication is based on the data representative of the signal from the sensor (34,34a;134;234); **characterised in that**
an indicator (44;144;244) providing the indication is integrated with the smart seal (60) and is operable to indicate the health status of the solid rocket motor (20) via a qualitative or quantitative display.

10. The method as recited in claim 9, wherein the indication of the health status is an indication of a condition of a solid propellant material (26) in the solid rocket motor (20).

## Patentansprüche

1. Feststoffraketenmotor (20), umfassend:
ein Gehäuse (30);
einen Festtreibstoff (26);
eine Dichtung (60), die an dem Motor (20) angebracht ist, wobei die Dichtung (60) den Festtreibstoff (26) von einem Fluid außerhalb des Gehäuses (30) isoliert;
eine Rechenvorrichtung (46), die an der Dichtung (60) angebracht und mit einem Sensor (34, 34a; 134; 234) verbunden ist, wobei die Rechenvorrichtung (46) einen Prozessor, einen Speicher (156; 256) und eine Kommunikationsvorrichtung (38; 138) beinhaltet; und
einen Indikator (44; 144; 244), der mit der Rechenvorrichtung (46) verbunden ist, **dadurch gekennzeichnet, dass**
der Indikator (44; 144; 244) in die Dichtung (60) integriert und betreibbar ist, um einen Gesundheitsstatus des Feststoffraketenmotors (20) über eine qualitative oder quantitative Anzeige anzugeben.

2. Feststoffraketenmotor nach Anspruch 1, wobei der Prozessor den Speicher (156; 256) beinhaltet.

3. Feststoffraketenmotor nach Anspruch 1 oder 2, wobei der Sensor (34, 34a; 134; 234) in Fluidkommunikation mit dem Feststofftreibstoff (26) steht.

4. Feststoffraketenmotor nach Anspruch 1, 2 oder 3, wobei der Sensor (34, 34a; 134; 234) mit dem Feststofftreibstoff (26) in Berührung steht.

5. Feststoffraketenmotor nach einem vorstehenden Anspruch, wobei der Sensor (34, 34a; 134; 234) dazu konfiguriert ist, Daten zu erzeugen, die die gespeicherte Gesundheit des Feststoffraketenmotors (20) angeben.

6. Feststoffraketenmotor nach einem vorstehenden Anspruch, wobei der Indikator (44; 144; 244) betreibbar ist, um mindestens zwei Datensammlungshäufigkeitsmodi anzugeben.

7. Feststoffraketenmotor nach Anspruch 6, wobei die mindestens zwei Datensammlungshäufigkeitsmodi eine Sammlung mit hoher Häufigkeit und eine Sammlung mit niedriger Häufigkeit beinhalten.

8. Feststoffraketenmotor nach Anspruch 7, wobei der Sensor (34, 34a; 134; 234) bei der Sammlung mit hoher Häufigkeit Daten mit einer relativ hohen Rate erzeugt, und der Sensor (34, 34a; 134; 234) bei der Sammlung mit niedriger Häufigkeit Daten mit einer relativ niedrigen Rate sammelt.

9. Verfahren zum Überwachen der Gesundheit eines Feststoffraketenmotors (20), wobei das Verfahren umfasst:
Anbringen einer Smart-Dichtung (60) an einem Feststoffraketenmotor (20), wobei die Smart-Dichtung (60) einen Sensor (34, 34a; 134; 234) beinhaltet;
Erzeugen eines Signals von dem Sensor (34, 34a; 134; 234);
Aufzeichnen von Daten, die für das Signal von dem Sensor (34, 34a; 134; 234) repräsentativ sind, in einem Speicher (156; 256);
Kommunizieren der Daten von der Smart-Dichtung (60) zu einer externen Rechenvorrichtung (46); und
Anzeigen einer Angabe eines Gesundheitsstatus des Feststoffraketenmotors (20), wobei die Angabe auf den Daten, die für das Signal von dem Sensor (34, 34a; 134; 234) repräsentativ sind, basiert; **dadurch gekennzeichnet, dass**
ein Indikator (44; 144; 244), der die Angabe bereitstellt, in der Smart-Dichtung (60) integriert ist und betreibbar ist, um den Gesundheitsstatus des Feststoffraketenmotors (20) über eine qualitative oder quantitative Anzeige anzugeben.

10. Verfahren nach Anspruch 9, wobei die Angabe des Gesundheitsstatus eine Angabe eines Zustands eines Feststofftreibstoffs (26) in dem Feststoffraketenmotor (20) ist.

## Revendications

1. Moteur-fusée à poudre (20), comprenant :
un carter (30);
un propergol solide (26) ;
un joint d'étanchéité (60) fixé au moteur (20), le joint d'étanchéité (60) isolant le propergol solide (26) d'un fluide externe du carter (30);
un dispositif informatique (46) fixé au joint d'étanchéité (60) et connecté à un capteur (34, 34a ; 134 ; 234), le dispositif informatique (46) incluant un processeur, une mémoire (156 ; 256), et un dispositif de communication (38 ; 138) ; et
un indicateur (44 ; 144 ; 244) connecté au dispositif informatique (46), **caractérisé en ce que**
l'indicateur (44 ; 144 ; 244) est intégré au joint d'étanchéité (60) et est utilisable pour indiquer un état de santé du moteur-fusée à poudre (20) via un affichage qualitatif ou quantitatif.

2. Moteur-fusée à poudre selon la revendication 1, dans lequel le processeur inclut la mémoire (156 ; 256).

3. Moteur-fusée à poudre selon la revendication 1 ou 2, dans lequel le capteur (34, 34a ; 134 ; 234) est en communication fluidique avec le propergol solide (26).

4. Moteur-fusée à poudre selon la revendication 1, 2 ou 3, dans lequel le capteur (34, 34a ; 134 ; 234) est en contact avec le propergol solide (26).

5. Moteur-fusée à poudre selon une quelconque revendication précédente, dans lequel le capteur (34, 34a ; 134 ; 234) est configuré pour générer des données indicatives d'une santé stockée du moteur-fusée à poudre (20).

6. Moteur-fusée à poudre selon une quelconque revendication précédente, dans lequel l'indicateur (44 ; 144; 244) est utilisable pour indiquer au moins deux modes de fréquence de collecte de données.

7. Moteur-fusée à poudre selon la revendication 6, dans lequel les au moins deux modes de fréquence de collecte de données incluent une collecte à haute fréquence et une collecte à basse fréquence.

8. Moteur-fusée à poudre selon la revendication 7, dans lequel, dans la collecte à haute fréquence, le capteur (34, 34a ; 134 ; 234) génère les données à un débit relativement haut et, dans la collecte à basse fréquence, le capteur (34, 34a ; 134 ; 234) génère les données à un débit relativement bas.

9. Procédé de surveillance d'une santé d'un moteur-fusée à poudre (20), le procédé comprenant :
la fixation d'un joint d'étanchéité intelligent (60) à un moteur-fusée à poudre (20), le joint d'étanchéité intelligent (60) incluant un capteur (34, 34a ; 134 ; 234) ;
la génération d'un signal à partir du capteur (34, 34a ; 134 ; 234) ;
l'enregistrement de données représentatives du signal à partir du capteur (34, 34a ; 134 ; 234) dans une mémoire (156 ; 256) ;
la communication des données du joint d'étanchéité intelligent (60) à un dispositif informatique externe (46) ; et
l'affichage d'une indication d'un état de santé du moteur-fusée à poudre (20), dans lequel l'indication est basée sur les données représentatives du signal à partir du capteur (34, 34a ; 134 ; 234) ; **caractérisé en ce que**
un indicateur (44 ; 144; 244) fournissant l'indication est intégré au joint d'étanchéité intelligent (60) et est utilisable pour indiquer l'état de santé du moteur-fusée à poudre (20) via un affichage qualitatif ou quantitatif.

10. Procédé selon la revendication 9, dans lequel l'indication de l'état de santé est une indication d'un état d'un propergol solide (26) dans le moteur-fusée à poudre (20).
